# EUROPEAN PATENT APPLICATION

(11) **EP 4 625 217 A1**
(43) Date of publication of application: **01.10.2025**
(21) Application number: 23893769.2
(22) Date of filing: 20.11.2023
(51) Int. Cl.: G06F 21/32

(54) **TERMINAL INFORMATION DISPLAY METHOD BASED ON INTERCONNECTION BETWEEN VEHICLE-MOUNTED TERMINAL AND MOBILE DEVICE**

(30) Priority: 25.11.2022 CN 202211493202
(71) Applicant: Nio Smart Technology Co., Ltd., Shanghai 201800 (CN)
(72) Inventor: CHEN, Xiang, Shanghai 201804 (CN)
(74) Representative: Vossius & Partner Patentanwälte Rechtsanwälte mbB
(86) International application number: PCT/CN2023/132575
(87) International publication number: WO 2024/109679

(57) **Abstract**

A terminal information display method based on interconnection between a vehicle-mounted terminal and a mobile device comprises: establishing a connection between the vehicle-mounted terminal and the mobile device; determining whether a login account of the vehicle-mounted terminal is consistent with a login account of the mobile device; acquiring the number of occupants in the vehicle by means of a pressure sensor, and determining whether the number of occupants in the vehicle is more than one; performing facial recognition on the occupants in the vehicle using a camera, and determining whether the occupants in the vehicle are trusted occupants; and controlling the vehicle-mounted terminal selectively to display a safe mode or an unsafe mode on an interface of the mobile device based on the determination results.

## Description

This application claims priority to Chinese patent application 202211493202.5, filed on November 25, 2022, entitled "Terminal Information Display Method Based on Interconnection of Vehicle-Mounted Terminal and Mobile Device", the entire content of which is incorporated herein by reference.

### TECHNICAL FIELD

The present invention relates to the technical field of vehicle intelligent control, and in particular, provides a method and apparatus for displaying terminal information based on interconnection between a vehicle-mounted terminal and a mobile device, a control device and a storage medium.

### BACKGROUND

With the improvement of people's living standards, vehicles have become one of the primary means of transportation for people's daily travel. As people spend more time using vehicles and increasingly rely on mobile communication, vehicles are required to provide users with more and more value-added services beyond users' driving needs in order to meet diverse requirements of different users. Vehicle-mounted terminals have thus entered a new stage of development.

The current vehicle-mounted terminals are very versatile. In addition to offering conventional navigation and entertainment services, the terminals may also be connected to mobile phones or XR devices to integrate call, messaging and social networking communication functions of the mobile phones onto the vehicle-mounted terminals, and display them on a vehicle-mounted display. When a new message is received, a prompt tone is played via the vehicle-mounted display and/or speaker to notify the user, so that the user may view messages in a timely and convenient manner during the use of vehicles. However, as people's awareness of privacy in the vehicle grows, private messages generally refer to communication messages on the user's mobile phone. When there are other occupants in the vehicle, the content displayed on the vehicle-mounted display is easily visible to other occupants. Especially, occupants sitting in the passenger seat may be easily informed of the content displayed on the vehicle-mounted display. If the content displayed on the vehicle-mounted display is private content that the driver does not want others to see, it's necessary to set the content displayed on the vehicle-mounted display to a private mode, or an unsafe mode. However, the current solution for protecting drivers' privacy messages has problems such as inaccurate judgment and low efficiency.

Accordingly, a new solution for displaying terminal information based on interconnection between a vehicle-mounted terminal and a mobile device is needed in the art to solve the above problems.

### SUMMARY

The present invention aims to solve the above technical problems, that is, to solve the problems such as inaccurate judgment and low efficiency of the current solution for protecting the driver's privacy messages. The present invention provides a method and apparatus for displaying terminal information based on interconnection between a vehicle-mounted terminal and a mobile device, a control device and a storage medium.

Ina first aspect, the present invention provides a terminal information display method based on interconnection between a vehicle-mounted terminal and a mobile device. The method includes:
establishing a connection between the vehicle-mounted terminal and the mobile device;
determining whether a login account of the vehicle-mounted terminal is consistent with a login account of the mobile device;
acquiring the number of occupants in a vehicle by means of a pressure sensor, and determining whether the number of occupants in the vehicle is more than one;
performing facial recognition on the occupants in the vehicle using a camera, and determining whether the occupants in the vehicle are trusted occupants; and
controlling the vehicle-mounted terminal selectively to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are trusted occupants.

In a technical solution of the terminal information display method based on interconnection between a vehicle-mounted terminal and a mobile device, establishing a connection between the vehicle-mounted terminal and the mobile device includes:
controlling the vehicle-mounted terminal to initiate a broadcast signal;
discovering, by the mobile device, the vehicle-mounted terminal after scanning the broadcast signal, and sending a connection request signal to the vehicle-mounted terminal; and
after monitoring the connection request signal sent by the mobile device, accepting, by the vehicle-mounted terminal, a connection request of the mobile device, and establishing the connection with the mobile device.

**In** a technical solution of the terminal information display method based on interconnection between a vehicle-mounted terminal and a mobile device, before determining whether the occupants in the vehicle are trusted occupants, the method further includes:
acquiring facial information of the trusted occupants in advance, and uploading the facial information of the trusted occupants to a vehicle-mounted terminal system for storage.

**In** a technical solution of the terminal information display method based on interconnection between a vehicle-mounted terminal and a mobile device, controlling the vehicle-mounted terminal selectively to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants includes:
when determining that the login account of the vehicle-mounted terminal is inconsistent with the login account of the mobile device, controlling the vehicle-mounted terminal to display the unsafe mode on the interface of the mobile device.

**In** a technical solution of the terminal information display method based on interconnection between a vehicle-mounted terminal and a mobile device, controlling the vehicle-mounted terminal selectively to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants includes:
determining that the login account of the vehicle-mounted terminal is consistent with the login account of the mobile device; and
acquiring the number of occupants in the vehicle by means of the pressure sensor, and when determining that the number of occupants in the vehicle is one, controlling the vehicle-mounted terminal to display the safe mode on the interface of the mobile device.

**In** a technical solution of the terminal information display method based on interconnection between a vehicle-mounted terminal and a mobile device, controlling the vehicle-mounted terminal selectively to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants includes:
determining that the login account of the vehicle-mounted terminal is consistent with the login account of the mobile device;
acquiring the number of occupants in the vehicle by means of the pressure sensor, and determining that the number of occupants in the vehicle is more than one; and
activating the camera to perform facial recognition on the occupants in the vehicle, and when determining that the occupants in the vehicle are trusted occupants, controlling the vehicle-mounted terminal to display the safe mode on the interface of the mobile device.

In a technical solution of the terminal information display method based on interconnection between a vehicle-mounted terminal and a mobile device, controlling the vehicle-mounted terminal selectively to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants includes:
determining that the login account of the vehicle-mounted terminal is consistent with the login account of the mobile device;
acquiring the number of occupants in the vehicle by means of the pressure sensor, and determining that the number of occupants in the vehicle is more than one; and
activating the camera to perform facial recognition on the occupants in the vehicle, and when determining that the occupants in the vehicle are not all trusted occupants, controlling the vehicle-mounted terminal to display the unsafe mode on the interface of the mobile device.

In a second aspect, the present invention provides an apparatus for displaying terminal information based on interconnection between a vehicle-mounted terminal and a mobile device. The apparatus includes:
an establishment module, configured to establish a connection between the vehicle-mounted terminal and the mobile device;
a first determination module, configured to determine whether a login account of the vehicle-mounted terminal is consistent with a login account of the mobile device;
a second determination module, configured to acquire the number of occupants in a vehicle by means of a pressure sensor, and determine whether the number of occupants in the vehicle is more than one;
a third determination module, configured to perform facial recognition on the occupants in the vehicle using a camera, and determine whether the occupants in the vehicle are trusted occupants; and
a control module, configured to selectively control the vehicle-mounted terminal to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are trusted occupants.

In a third aspect, the present invention provides a control device. The control device includes a processor and a storage device. The storage device is suitable for storing a plurality of program codes, and the program codes are suitable for being loaded and run by the processor to perform the method in any one of the technical solutions of the above terminal information display method based on interconnection between a vehicle-mounted terminal and a mobile device.

In a fourth aspect, a computer-readable storage medium storing a plurality of program codes thereon is provided. The plurality of program codes are suitable for being loaded and run by a processor to perform the method in any one of the technical solutions of the above terminal information display method based on interconnection between a vehicle-mounted terminal and a mobile device.

The above one or more technical solutions in the present invention have at least one or more beneficial effects as follows:
In the technical solution for implementing the present invention, a terminal information display method based on interconnection between a vehicle-mounted terminal and a mobile device is provided. The display method aims to establish a connection between the vehicle-mounted terminal and the mobile device; determine whether a login account of the vehicle-mounted terminal is consistent with a login account of the mobile device; acquire the number of occupants in a vehicle by means of a pressure sensor, and determine whether the number of occupants in the vehicle is more than one; perform facial recognition on the occupants in the vehicle using a camera, and determine whether the occupants in the vehicle are trusted occupants; and selectively control the vehicle-mounted terminal to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants. The display method comprehensively determines whether the current environment is a safe environment based on the login accounts of the vehicle and the mobile device, the pressure sensor of the vehicle, the number of occupants in the vehicle and facial recognition of the camera, thereby displaying privacy information of the user more safely and conveniently, so that during a drive, the user can easily browse information and protect personal privacy information from being leaked.

### BRIEF DESCRIPTION OF DRAWINGS

The disclosure of the present invention will become easier to understand with reference to the accompanying drawings. It will be easily understood by those skilled in the art that these accompanying drawings are merely for illustration purposes and are not intended to limit the protection scope of the present invention. In addition, like numerals are used to represent like parts in the figures, in which:
FIG. 1 is a flowchart illustrating main steps in a terminal information display method based on interconnection between a vehicle-mounted terminal and a mobile device according to an embodiment of the present invention;
FIG. 2 is an overall flowchart illustrating interconnection between a mobile phone or an XR device and a vehicle according to an embodiment of the present invention;
FIG. 3 is a flowchart illustrating a connection from a mobile phone or an XR device to a vehicle according to an embodiment of the present invention;
FIG. 4 is a flowchart illustrating a connection from a vehicle to a mobile phone or an XR device according to an embodiment of the present invention.
FIG. 5 is a flowchart illustrating overall steps in a terminal information display method based on interconnection between a vehicle-mounted terminal and a mobile device according to an embodiment of the present invention;
FIG. 6 is a block diagram illustrating a main structure of an apparatus for displaying terminal information based on interconnection between a vehicle-mounted terminal and a mobile device according to an embodiment of the present invention;
FIG. 7 is a block diagram illustrating a main structure of a control device according to an embodiment of the present invention.

### DETAILED DESCRIPTION

Some implementations of the present invention are described below with reference to the accompanying drawings. It should be understood by those skilled in the art that these embodiments are merely used to explain the technical principle of the present invention, and are not intended to limit the protection scope of the present invention.

In the description of the present invention, "module" and "processor" can include hardware, software or a combination of both. A module can include either hardware circuits, such as various suitable sensors, communication ports and memories, or software parts, such as program codes, or a combination of software and hardware. The processor can be a central processing unit, a microprocessor, an image processor, a digital signal processor or any other suitable processor. The processor possesses data and/or signal processing functionalities. The processor can be implemented in software, hardware or a combination of both. Non-transitory computer-readable storage medium includes any suitable medium that can store program codes, such as magnetic disc, hard disk, optical disc, flash memory, read-only memory, random access memory, and the like. The term of "A and/or B" represents all possible combinations of A and B, such as A only, B only, or both A and B. The term of "at least one A or B" or "at least one of A and B" has a similar meaning to "A and/or B", and can include A only, B only, or both A and B. The singular terms of "a" and "this" can also encompass plural forms.

At present, in a scenario where a vehicle-mounted display of a vehicle displays a screen of a mobile device, when there are other occupants in the vehicle and the content displayed on the vehicle-mounted display is unwilling to be known by others, it's generally necessary to set a display mode of the vehicle-mounted display to an unsafe mode in this case to avoid that others such as a passenger sitting in the passenger seat be clearly informed of the content displayed on the vehicle-mounted display. The current solution that protects the driver's privacy messages has the problems such inaccurate judgment and low efficiency.

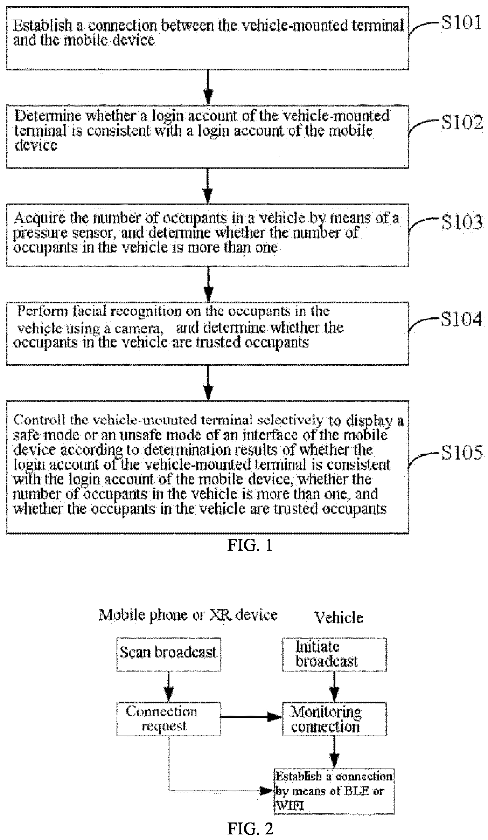

Therefore, reference is made to FIG. 1, which is a flowchart illustrating main steps in a terminal information display method based on interconnection between a vehicle-mounted terminal and a mobile device according to an embodiment of the present invention. As shown in FIG. 1, the terminal information display method based on interconnection between a vehicle-mounted terminal and a mobile device in an embodiment of the present invention mainly includes steps S101 to S105 as follows.

Step S101: Establish a connection between the vehicle-mounted terminal and the mobile device.

In a specific example, the mobile device is, for example, a mobile phone or an XR device. In this example, there are two mobile devices, one of which is a mobile phone, and the other is an XR device such as head-mounted AR glasses, to establish a connection between the vehicle-mounted terminal and the mobile device such as a connection between the vehicle-mounted terminal and the mobile phone, or establish a connection between the vehicle-mounted terminal and head-mounted AR glasses.

After the vehicle-mounted terminal is connected to the mobile phone, the mobile phone may be projected onto the vehicle-mounted display, allowing navigation, video, music, game or other functions in the mobile phone to be operated via the vehicle-mounted display. The connection between the vehicle-mounted terminal and the mobile phone may facilitate watching videos in the mobile phone and using navigation in the mobile phone by means of the vehicle-mounted display.

Similarly, after the vehicle-mounted terminal is connected to the XR device, the XR device may be projected onto the vehicle-mounted display, enabling the XR device to be operated via the vehicle-mounted display.

Step S102: Determine whether a login account of the vehicle-mounted terminal is consistent with a login account of the mobile device.

In a specific example, the vehicle-mounted terminal requires login to an account, which is generally the account of a vehicle owner. The mobile phone or the XR device also requires login to an account, which is the account of its owner. When the login account information of the mobile phone or the XR device is consistent with the login account information of the vehicle-mounted terminal, it means that the vehicle owner has established a connection between the vehicle-mounted terminal and the mobile device, intending to project the mobile device onto the vehicle-mounted display. Based on different situations, the vehicle-mounted display is controlled to display a safe mode or an unsafe mode of an interface of the mobile device, so that the vehicle owner may operate the mobile device on the vehicle-mounted display and view messages displayed on the mobile device.

When the login account information of the mobile phone or the XR device is inconsistent with the login account information of the vehicle-mounted terminal, the vehicle-mounted display is controlled to display the unsafe mode on the interface of the mobile device.

Step S103: Acquire the number of occupants in a vehicle by means of a pressure sensor, and determine whether the number of occupants in the vehicle is more than one.

In a specific example, during a drive, when the login account information of the mobile phone or the XR device is also consistent with the login account information of the vehicle-mounted terminal, the number of occupants in the vehicle continues to be acquired by means of the pressure sensor, and whether the number of occupants in the vehicle is more than one is determined, so that the vehicle-mounted display is controlled to display the safe mode or the unsafe mode on the interface of the mobile device based on different situations.

A pressure sensor is provided on each seat of the vehicle. When there is an occupant sitting on the seat, the pressure sensor will acquire a pressure signal, thereby acquiring the number of occupants in the vehicle. When the number of occupants in the vehicle is one, the vehicle-mounted terminal is controlled to display the safe mode on the interface of the mobile device; when the number of occupants in the vehicle is more than one, step S104 is performed to continue controlling the vehicle-mounted display to display the safe mode or unsafe mode on the interface of the mobile device based on different situations.

Step S104: Perform facial recognition on the occupants in the vehicle using a camera, and determine whether the occupants in the vehicle are trusted occupants.

In a specific example, when the pressure sensor acquires that the number of occupants in the vehicle is more than one, i.e., more than 2, the camera is activated to perform facial recognition on the occupants in the vehicle to identify whether the occupants in the vehicle are trusted occupants.

In an implementation of embodiments of the present invention, before determining whether the occupants in the vehicle are trusted occupants, the method also includes:
acquiring facial information of the trusted occupants in advance, and uploading the facial information of the trusted occupants to a vehicle-mounted terminal system for storage.

When it is identified that the respective occupants in the vehicle are trusted occupants, the vehicle-mounted terminal is controlled to display the safe mode on the interface of the mobile device; when it is identified that at least one of occupants in the vehicle is un-trusted occupants, the vehicle-mounted terminal is controlled to display the unsafe mode on the interface of the mobile device.

Step S105: Selectively control the vehicle-mounted terminal to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are trusted occupants.

Based on the above steps S101 to S105, a terminal information display method based on interconnection between a vehicle-mounted terminal and a mobile device is provided. The display method aims to establish a connection between the vehicle-mounted terminal and the mobile device; determine whether a login account of the vehicle-mounted terminal is consistent with a login account of the mobile device; acquire the number of occupants in a vehicle by means of a pressure sensor, and determine whether the number of occupants in the vehicle is more than one; perform facial recognition on the occupants in the vehicle using a camera to, and determine whether the occupants in the vehicle are trusted occupants; and selectively control the vehicle-mounted terminal to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are the trusted occupants. The display method comprehensively determines whether the current environment is a safe environment based on the login accounts of the vehicle and the mobile device, the pressure sensor of the vehicle, the number of occupants in the vehicle and facial recognition of the camera, thereby displaying privacy information of the user more safely and conveniently, so that during a drive, the user can easily browse information and protect personal privacy information from being leaked.

Steps S101 to S105 are further described below.

In an implementation of embodiments of the present invention, step S101 may further include the following steps S1011 to S1013.

Step S1011: Control the vehicle-mounted terminal to initiate a broadcast signal.

Step S1012: The mobile device discovers the vehicle-mounted terminal after scanning the broadcast signal, and sends a connection request signal to the vehicle-mounted terminal.

Step S1013: After monitoring the connection request signal sent by the mobile device, the vehicle-mounted terminal accepts a connection request of the mobile device, and establishes the connection with the mobile device.

In a specific example, FIG. 2 illustrates an overall flowchart of interconnection between a mobile phone or an XR device and a vehicle. As shown in FIG. 2, the vehicle initiates a broadcast signal, and the mobile phone or the XR device scans the broadcast signal. When the mobile phone or the XR device scans the broadcast signal of the vehicle, a connection request instruction will be sent to the vehicle. The vehicle initiates a monitoring connection request after initiating the broadcast, receives the connection instruction sent by the mobile phone or the XR device after monitoring the connection request instruction sent by the mobile phone or the XR device, and establishes a connection with the mobile phone or the XR device by means of Bluetooth blow energy (BLE) or WIFI.

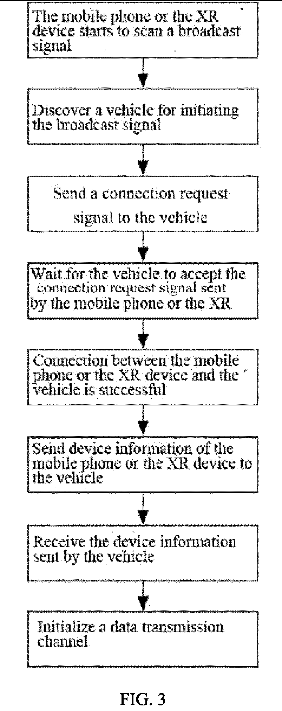

In a specific example, FIG. 3 illustrates a flowchart of a connection from a mobile phone or an XR device to a vehicle. As shown in FIG. 3, the mobile phone or the XR device starts to scan a broadcast signal, and discovers that a device for initiating the broadcast signal is a vehicle. The mobile phone or the XR device requests to connect to the vehicle by means of nearBy. In this case, the request is forwarded to a vehicle terminal (vehicle-mounted terminal), and after waiting for the vehicle terminal to accept the connection request, connection is successful. The mobile phone or the XR device sends its own device information to the vehicle, and the vehicle sends its own device information to the mobile phone or the XR device. The vehicle receives device information of the mobile phone or the XR device, and the mobile phone or the XR device receives the device information of the vehicle, and starts to initialize a data transmission channel.

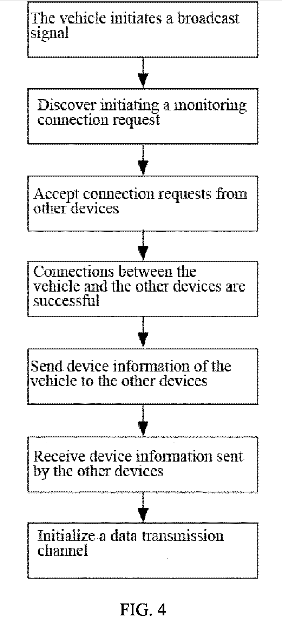

In a specific example, FIG. 4 illustrates a flowchart of a connection from a vehicle to a mobile phone or an XR device. As shown in FIG. 4, the vehicle first starts to scan a broadcast signal, sends out the broadcast, and then initiates a monitoring connection request. After a connection request instruction sent by other devices is monitored, connection requests of the other devices are accepted, and connections between the vehicle and the other vehicles are successful. The vehicle sends its own device information to the mobile phone or the XR device, and the mobile phone or the XR device sends its own device information to the vehicle. The mobile phone or the XR device receives the device information of the vehicle, and the vehicle receives the device information of the mobile phone or the XR device, and starts to initialize a data transmission channel.

In an implementation of the present invention, step S105 may further include the following step S1051.

Step S1051: when determining that the login account of the vehicle-mounted terminal is inconsistent with the login account of the mobile device, control the vehicle-mounted terminal to display the unsafe mode on the interface of the mobile device.

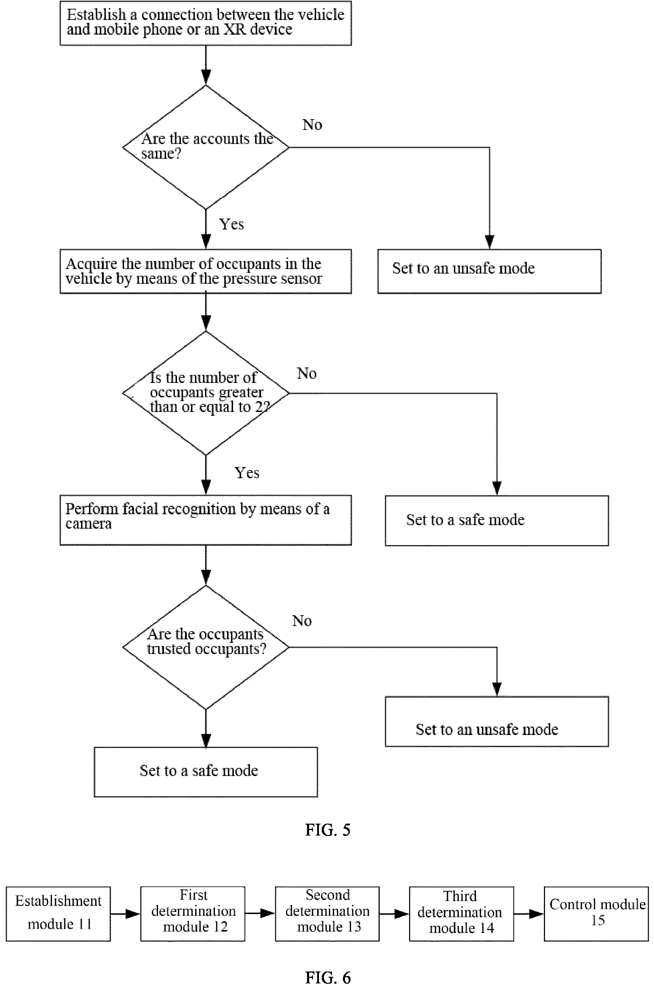

In a specific example, FIG. 5 illustrates a flowchart of overall steps in a terminal information display method based on interconnection between a vehicle-mounted terminal and a mobile device. As shown in FIG. 5, after a connection between the vehicle-mounted terminal and the mobile device is established, the login account information of the vehicle-mounted terminal and the login account information of the mobile device connected to the vehicle-mounted terminal are viewed. When the login account information of the vehicle-mounted terminal is inconsistent with the login account information of the mobile device, the vehicle-mounted terminal is controlled to display an unsafe mode on the interface of the mobile device. A vehicle owner on the driver's seat needs to click a screen of the vehicle-mounted terminal to browse if he/she wants to view the display content of the vehicle-mounted terminal.

**In** an implementation of the present invention, step S105 may further include the following steps S1051' to S1052'.

Step S1051': Determine that the login account of the vehicle-mounted terminal is consistent with the login account of the mobile device.

Step S1052': Acquire the number of occupants in the vehicle by means of the pressure sensor, and when determining that the number of occupants in the vehicle is one, control the vehicle-mounted terminal to display the safe mode on the interface of the mobile device.

In a specific example, as shown in FIG. 5, after the connection between the vehicle-mounted terminal and the mobile device is established, the login account information of the vehicle-mounted terminal and the login account information of the mobile device connected to the vehicle-mounted terminal are viewed. When the login account of the vehicle-mounted terminal is consistent with the login account of the mobile device, the number of occupants in the vehicle is acquired by means of the pressure sensor in the vehicle. When the pressure sensor in the vehicle acquires that the number of occupants in the vehicle is only one, it means that the current environment is a safe environment, the situation that the content displayed on the vehicle-mounted terminal is known to others does not appear, and the vehicle-mounted terminal is controlled to display the safe mode on the interface of the mobile device.

In an implementation of the present invention, step S105 may further include the following steps S1051" to S1053".

Step S1051": Determine that the login account of the vehicle-mounted terminal is consistent with the login account of the mobile device.

Step S1052": Acquire the number of occupants in the vehicle by means of the pressure sensor, and determine that the number of occupants in the vehicle is more than one.

Step S1053": Activate the camera to perform facial recognition on the occupants in the vehicle, and when determining that the occupants in the vehicle are trusted occupants, control the vehicle-mounted terminal to display the safe mode on the interface of the mobile device.

In a specific example, as shown in FIG. 5, after the connection between the vehicle-mounted terminal and the mobile device is established, the login account information of the vehicle-mounted terminal and the login account information of the mobile device connected to the vehicle-mounted terminal are viewed. When the login account of the vehicle-mounted terminal is consistent with the login account of the mobile device, the number of occupants in the vehicle is acquired by means of the pressure sensor in the vehicle. When the pressure sensor in the vehicle acquires that the number of occupants in the vehicle is more than one, that is, when the pressure sensor acquires that the number of occupants is two or more, the camera is activated to perform facial recognition on all occupants in the vehicle. When all faces recognized by the camera are facial information of the trusted occupants pre-stored in the vehicle-mounted terminal, it means that the current environment is a safe environment, the situation that the content displayed on the vehicle-mounted terminal is known to others does not appear, and the vehicle-mounted terminal is controlled to display the safe mode on the interface of the mobile device.

In an implementation of the present invention, step S105 may further include the following steps S1051‴ to S1053‴.

Step S1051‴: Determine that the login account of the vehicle-mounted terminal is consistent with the login account of the mobile device.

Step S1052‴: Acquire the number of occupants in the vehicle by means of the pressure sensor, and determine that the number of occupants in the vehicle is more than one.

S1053‴: Activate the camera to perform facial recognition on the occupants in the vehicle, and when determining that the occupants in the vehicle are not all trusted occupants, control the vehicle-mounted terminal to display the unsafe mode on the interface of the mobile device.

In a specific example, as shown in FIG. 5, after the connection between the vehicle-mounted terminal and the mobile device is established, the login account information of the vehicle-mounted terminal and the login account information of the mobile device connected to the vehicle-mounted terminal are viewed. When the login account of the vehicle-mounted terminal is consistent with the login account of the mobile device, the number of occupants in the vehicle is acquired by means of the pressure sensor in the vehicle. When the pressure sensor in the vehicle acquires that the number of occupants in the vehicle is more than one, that is, when the pressure sensor acquires that the number of occupants in the vehicle is two or more, the camera is activated to perform facial recognition on all occupants in the vehicle. When at least one of all faces recognized by the camera is not within a facial information image of the trusted occupants pre-stored in the vehicle-mounted terminal, it means that the current environment is an unsafe environment, and the situation that the content displayed on the vehicle-mounted terminal is known to others will appear. In this case, the vehicle-mounted terminal is controlled to display the unsafe mode on the interface of the mobile device.

It should be pointed out that although various steps are described in a particular order in the above embodiments, it can be understood by those skilled in the art that in order to achieve the effect of the present invention, different steps are not necessarily to be performed in such order, but can be performed concurrently (in parallel) or in another order, and such variations fall within the protection scope of the present invention.

Further, the present invention also provides an apparatus for displaying terminal information based on interconnection between a vehicle-mounted terminal and a mobile device.

Reference is made to FIG. 6, which is a block diagram illustrating a main structure of an apparatus for displaying terminal information based on interconnection between a vehicle-mounted terminal and a mobile device according to an embodiment of the present invention. As shown in FIG. 6, the apparatus for displaying terminal information based on interconnection between a vehicle-mounted terminal and a mobile device in an embodiment of the present invention mainly includes an establishment module 11, a first determination module 12, a second determination module 13, a third determination module 14, and a control module 15. In some embodiments, the establishment module 11 may be configured to establish a connection between the vehicle-mounted terminal and the mobile device. The first determination module 12 may be configured to determine whether a login account of the vehicle-mounted terminal is consistent with a login account of the mobile device. The second determination module 13 may be configured to acquire the number of occupants in a vehicle by means of a pressure sensor, and determine whether the number of occupants in the vehicle is more than one. The third determination module 14 may be configured to perform facial recognition on the occupants in the vehicle using a camera to, and determine whether the occupants in the vehicle are trusted occupants. The control module 15 may be configured to selectively control the vehicle-mounted terminal to display a safe mode or an unsafe mode of an interface of the mobile device according to determination results of whether the login account of the vehicle-mounted terminal is consistent with the login account of the mobile device, whether the number of occupants in the vehicle is more than one, and whether the occupants in the vehicle are trusted occupants.

In an implementation, reference may be made to steps S101 to S105 for a description of specific implementation functions.

The above apparatus for displaying terminal information based on interconnection between a vehicle-mounted terminal and a mobile device may be configured to perform embodiments of the terminal information display method based on interconnection between a vehicle-mounted terminal and a mobile device as shown in FIG. 1. The technical principles, technical problems solved and technical effects generated by the two are similar. Those skilled in the art may clearly understand that, for convenience and simplicity of the description, a specific working process and relevant descriptions of the apparatus for displaying terminal information based on interconnection between a vehicle-mounted terminal and a mobile device may refer to the description of embodiments of the terminal information display method based on interconnection between a vehicle terminal and a mobile device, which will not be repeated here.

It can be understood by those skilled in the art that all or part of the flow in the method of an above embodiment, which is implemented by the present invention, can also be accomplished by instructing associated hardware through a computer program, which can be stored in a computer-readable storage medium, and when executed by a processor, can implement the steps of various method embodiments as described above. To this regard, the computer program includes computer program codes, which can be in a form of source code, in a form of object code, in a form of executable file, in some intermediate form, and the like. The computer-readable storage medium can include any entity or apparatus, medium, U disk, removable hard disk, magnetic disc, optical disk, computer memory, read-only memory, random access memory, electric carrier signal, telecommunication signal, software distribution medium, and the like, which is capable of carrying the computer program codes. It should be noted that the contents contained in the computer-readable storage medium can be appropriately added or reduced according to the requirements of legislation and patent practice in the jurisdiction. For example, in some jurisdiction, according to the legislation and patent practice, the computer-readable storage medium does not include electric carrier signals and telecommunication signals.

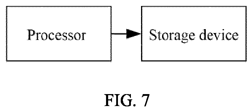

Further, the present invention also provides a control device. **In** an embodiment of a control device of the present invention, as shown in FIG. 7, the control device includes a processor and a storage device. The storage device may be configured to store a program for performing the terminal information display method based on interconnection between a vehicle terminal and a mobile device in the above method embodiments, and the processor may be configured to execute the program in the storage device, the program including but not limited to the program for performing the terminal information display method based on interconnection between a vehicle terminal and a mobile device in the above method embodiments. For the convenience of explanation, only the part related to embodiments of the present invention is shown. For specific technical details not disclosed, reference is made to the method part of the embodiments of the present invention. The control device may be a control device formed by various electronic devices.

Further, the present invention also provides an electronic device. **In** an embodiment of the electronic device according to the present invention, the computer-readable storage medium may be configured to store a program for performing the terminal information display method based on interconnection between a vehicle terminal and a mobile device in the above method embodiments, and the program may be loaded and run by a processor to implement the above terminal information display method based on interconnection between a vehicle terminal and a mobile device. For the convenience of explanation, only the part related to the embodiments of the present invention is shown. For specific technical details not disclosed, reference is made to the method part of the embodiments of the present invention. The computer-readable storage medium may be a storage device formed by various electronic devices. Optionally, the computer-readable storage medium in the embodiments of the present invention is a non-temporary computer-readable storage medium.

Further, it should be understood that since the setting of the respective modules is merely for illustrating the functional units of the apparatus of the present invention, the physical devices corresponding to such modules can be the processor itself, or a part of software, a part of hardware, or a part of a combination of software and hardware, in the processor. Therefore, the number of the respective modules in the figures is merely schematic.

It can be understood by those skilled in the art that the respective modules in the apparatus can be split or merged adaptively. Such splitting or merging of specific modules will not cause the technical solution to deviate from the principle of the present invention, so the technical solutions subjected to the splitting or merging will fall within the protection scope of the present invention.

Thus, the technical solution of the present invention has been described in combination with the preferred implementations shown in the accompanying drawings. However, it is easy for those skilled in the art to understand that the protection scope of the present invention is obviously not limited to such specific implementations. Under the premise of not deviating from the principle of the present invention, those skilled in the art can make equivalent alterations or substitutions to associated technical features, and the technical solutions subjected to such alterations or substitutions will fall within the protection scope of the present invention.

## Claims

1. A terminal information display method based on interconnection between a vehicle-mounted terminal and a mobile device, **characterized in that** the method comprises:
establishing a connection between the vehicle-mounted terminal and the mobile device;
determining whether a login account of the vehicle-mounted terminal is consistent with a login account of the mobile device;
acquiring the number of occupants in the vehicle by means of a pressure sensor, and determining whether the number of occupants in the vehicle is more than one;
performing facial recognition on the occupants in the vehicle using a camera, and determining whether the occupants in the vehicle are trusted occupants; and
controlling the vehicle-mounted terminal selectively to display a safe mode or an unsafe mode on an interface of the mobile device based on determination results of whether the login account of the vehicle-mounted terminal is consistent with the login account of the mobile device, whether the number of occupants in the vehicle is more than one, and whether the occupants in the vehicle are trusted occupants.

2. The terminal information display method based on interconnection between a vehicle-mounted terminal and a mobile device according to claim 1, **characterized in that** establishing a connection between the vehicle-mounted terminal and the mobile device comprises:
controlling the vehicle-mounted terminal to initiate a broadcast signal;
discovering, by the mobile device, the vehicle-mounted terminal after scanning the broadcast signal, and sending a connection request signal to the vehicle-mounted terminal; and
after monitoring the connection request signal sent by the mobile device, accepting, by the vehicle-mounted terminal, a connection request of the mobile device, and establishing the connection with the mobile device.

3. The terminal information display method based on interconnection between a vehicle-mounted terminal and a mobile device according to claim 1 or 2, **characterized in that** before determining whether the occupants in the vehicle are trusted occupants, the method further comprises:
acquiring facial information of the trusted occupants in advance, and storing the facial information of the trusted occupants to a vehicle-mounted terminal system.

4. The terminal information display method based on interconnection between a vehicle-mounted terminal and a mobile device according to any one of claims 1 to 3, **characterized in that** controlling the vehicle-mounted terminal selectively to display a safe mode or an unsafe mode on an interface of the mobile device based on determination results of whether the login account of the vehicle-mounted terminal is consistent with the login account of the mobile device, whether the number of occupants in the vehicle is more than one, and whether the occupants in the vehicle are the trusted occupants comprises:
when determining that the login account of the vehicle-mounted terminal is inconsistent with the login account of the mobile device, controlling the vehicle-mounted terminal to display the unsafe mode on the interface of the mobile device.

5. The terminal information display method based on interconnection between a vehicle-mounted terminal and a mobile device according to any one of claims 1 to 3, **characterized in that** controlling the vehicle-mounted terminal selectively to display a safe mode or an unsafe mode on an interface of the mobile device based on determination results of whether the login account of the vehicle-mounted terminal is consistent with the login account of the mobile device, whether the number of occupants in the vehicle is more than one, and whether the occupants in the vehicle are the trusted occupants comprises:
determining whether the login account of the vehicle-mounted terminal is consistent with the login account of the mobile device; and
acquiring the number of occupants in the vehicle by means of the pressure sensor, and when determining that the number of occupants in the vehicle is one, controlling the vehicle-mounted terminal to display the safe mode on the interface of the mobile device.

6. The terminal information display method based on interconnection between a vehicle-mounted terminal and a mobile device according to any one of claims 1 to 3, **characterized in that** " selectively controlling the vehicle-mounted terminal to display a safe mode or an unsafe mode on an interface of the mobile device according to determination results of whether the login account of the vehicle-mounted terminal is consistent with the login account of the mobile device, whether the number of occupants in the vehicle is more than one, and whether the occupants in the vehicle are the trusted occupants" comprises:
determining whether the login account of the vehicle-mounted terminal is consistent with the login account of the mobile device;
acquiring the number of occupants in the vehicle by means of the pressure sensor, and determining that the number of occupants in the vehicle is more than one; and
activating the camera to perform facial recognition on the occupants in the vehicle, and when determining that the occupants in the vehicle are trusted occupants, controlling the vehicle-mounted terminal to display the safe mode on the interface of the mobile device.

7. The terminal information display method based on interconnection between a vehicle-mounted terminal and a mobile device according to any one of claims 1 to 3, **characterized in that** " selectively controlling the vehicle-mounted terminal to display a safe mode or an unsafe mode on an interface of the mobile device according to determination results of whether the login account of the vehicle-mounted terminal is consistent with the login account of the mobile device, whether the number of occupants in the vehicle is more than one, and whether the occupants in the vehicle are the trusted occupants" comprises:
determining whether the login account of the vehicle-mounted terminal is consistent with the login account of the mobile device;
acquiring the number of occupants in the vehicle by means of the pressure sensor, and determining that the number of occupants in the vehicle is more than one; and
performing facial recognition on the occupants in the vehicle using the camera, and when determining that the occupants in the vehicle are not all trusted occupants, controlling the vehicle-mounted terminal to display the unsafe mode on the interface of the mobile device.

8. An apparatus for displaying terminal information based on interconnection between a vehicle-mounted terminal and a mobile device, **characterized in that** the device comprises:
an establishment module, configured to establish a connection between the vehicle-mounted terminal and the mobile device;
a first determination module, configured to determine whether a login account of the vehicle-mounted terminal is consistent with a login account of the mobile device;
a second determination module, configured to acquire the number of occupants in the vehicle by means of a pressure sensor, and determine whether the number of occupants in the vehicle is more than one;
a third determination module, configured to perform facial recognition on the occupants in the vehicle using a camera, and determine whether the occupants in the vehicle are trusted occupants; and
a control module, configured to control the vehicle-mounted terminal selectively to display a safe mode or an unsafe mode on an interface of the mobile device based on determination results of whether the login account of the vehicle-mounted terminal is consistent with the login account of the mobile device, whether the number of occupants in the vehicle is more than one, and whether the occupants in the vehicle are trusted occupants.

9. A control device, comprising a processor and a storage device, the storage device is configured to store a plurality of program codes, wherein the program codes are adapted to be loaded and executed by the processor to perform the terminal information display method based on interconnection between a vehicle-mounted terminal and a mobile device according to any one of claims 1 to 7.

10. A computer-readable storage medium storing a plurality of program codes thereon, wherein the program codes are adapted to be loaded and executed by a processor to perform the terminal information display method based on interconnection between a vehicle-mounted terminal and a mobile device according to any one of claims 1 to 7.
